# EUROPEAN PATENT APPLICATION

(11) **EP 3 220 053 A1**
(43) Date of publication of application: **20.09.2017**
(21) Application number: 17160047.1
(22) Date of filing: 09.03.2017
(51) Int. Cl.: F23R 3/34, F23R 3/46

(54) **AXIALLY STAGED FUEL INJECTOR ASSEMBLY AND METHOD OF MOUNTING**

(30) Priority: 15.03.2016 US 201615070093
(71) Applicant: General Electric Company, Schenectady, NY 12345 (US)
(72) Inventor: CIHLAR, David William, Greenville, SC 29615 (US); KEGLEY, Jonathan Hale, Greenville, SC 29615 (US); WILLIS, Christopher Paul, Greenville, SC 29615 (US); REED, Jonathan Glenn, Greenville, SC 29615 (US)
(74) Representative: Lee, Brenda

(57) **Abstract**

The present disclosure is directed to a system 100 for mounting an axially staged fuel injector 60 assembly. The system 100 includes an annularly shaped liner 42 that at least partially defines a hot gas path of a combustor. The liner 42 defines an injector opening 102 that extends radially through the liner 42. A flow sleeve 54 circumferentially surrounds at least a portion of the liner 42 and is radially spaced from the liner 42 to form a cooling flow annulus 56 therebetween. An annular injector boss 104 extends radially from the liner 42 through the flow sleeve 54. The injector boss 104 includes a first end 140 portion 106 that extends circumferentially about the injector opening 102 and a second end 142 portion 108 that is disposed radially outwardly from an outer surface 62 of the flow sleeve 54. The injector boss 104 is formed to receive a fuel injector 60. The present disclosure is also directed to a method for mounting an axially staged fuel injector 60.

## Description

### FIELD OF THE TECHNOLOGY

The subject matter disclosed herein relates to a combustor for a gas turbine. More specifically, the disclosure is directed to a system and method for mounting an axially staged fuel injector assembly of a gas turbine combustor.

### BACKGROUND

Gas turbines usually burn hydrocarbon fuels and produce air polluting emissions such as oxides of nitrogen (NOx) and carbon monoxide (CO). Oxidization of molecular nitrogen in the gas turbine depends upon the temperature of gas located in a combustor, as well as the residence time for reactants located in the highest temperature regions within the combustor. Thus, the amount of NOx produced by the gas turbine may be reduced by either maintaining the combustor temperature below a temperature at which NOx is produced, or by limiting the residence time of the reactant in the combustor.

One approach for controlling the temperature of the combustor involves pre-mixing fuel and air to create a lean fuel-air mixture prior to combustion. This approach may include the axial staging of fuel injection where a first fuel-air mixture is injected and ignited at a first or primary combustion zone of the combustor to produce a main flow of high energy combustion gases, and where a second fuel-air mixture is injected into and mixed with the main flow of high energy combustion gases via a plurality of radially oriented and circumferentially spaced fuel injectors or axially staged fuel injector assemblies positioned downstream from the primary combustion zone. Axially staged injection increases the likelihood of complete combustion of available fuel, which in turn reduces the air polluting emissions.

During operation of the combustor, it is necessary to cool one or more liners or ducts that form a combustion chamber and/or a hot gas path through the combustor. Liner cooling is typically achieved by routing a cooling medium such as the compressed air through a cooling flow annulus or flow passage defined between the liner and a flow sleeve and/or an impingement sleeve that surrounds the liner. However, in particular configurations, hardware for mounting the axially staged fuel injector assemblies creates a flow blockage or obstruction within the cooling flow annulus, thereby disrupting the cooling flow through the cooling flow annulus. This disruption in the cooling flow annulus may result in reduced pressure of the cooling medium at a head end portion of the combustor and/or reduced cooling effectiveness of the cooling medium within the cooling flow annulus, particularly downstream from the mounting hardware.

### BRIEF DESCRIPTION OF THE TECHNOLOGY

Aspects and advantages are set forth below in the following description, or may be obvious from the description, or may be learned through practice.

One embodiment of the present disclosure is directed to a system for mounting an axially staged fuel injector. The system includes an annularly shaped liner that at least partially defines a hot gas path of a combustor. The liner defines an injector opening that extends radially through the liner. A flow sleeve circumferentially surrounds at least a portion of the liner and is radially spaced from the liner to form a cooling flow annulus therebetween. An annular injector boss extends radially from the liner through the flow sleeve. The injector boss includes a first end portion that extends circumferentially about the injector opening and a second end portion that is disposed radially outwardly from an outer surface of the flow sleeve. The injector boss is formed to receive a fuel injector.

Another embodiment of the present disclosure is directed to a system for mounting an axially staged fuel injector. The system includes an annularly shaped liner that at least partially defines a hot gas path of a combustor. The liner defines a injector boss opening that extends radially through the liner. A flow sleeve circumferentially surrounds at least a portion of the liner. The flow sleeve is radially spaced from the liner to form a cooling flow annulus therebetween. An annular injector boss is coaxially aligned with the injector opening and extends radially from the liner through the flow sleeve. The injector boss has a first end portion that is fixedly connected to the liner and a second end portion disposed radially outwardly from an outer surface of the flow sleeve. The injector boss is formed to receive a fuel injector.

Another embodiment includes a method for mounting an axially staged fuel injector. The method includes inserting a support plate into a slot defined along a side wall of a second end portion of an injector boss where the second end portion is disposed radially outwardly from an outer surface of the flow sleeve, placing a support plate cap over the support plate, threading a first end of a double ended stud into a fastener opening defined by the support plate where the double ended stud extends through the support plate cap and inserting a fuel injector into the injector boss where a second end of the double ended stud extends through a mounting hole defined by the fuel injector. The method further includes securing the fuel injector to the support plate cap via a nut that is threadingly engaged with the second end of the double ended stud.

Those of ordinary skill in the art will better appreciate the features and aspects of such embodiments, and others, upon review of the specification.

### BRIEF DESCRIPTION OF THE DRAWINGS

A full and enabling disclosure of the of various embodiments, including the best mode thereof to one skilled in the art, is set forth more particularly in the remainder of the specification, including reference to the accompanying figures, in which:
FIG. 1 is a functional block diagram of an exemplary gas turbine that may incorporate various embodiments of the present disclosure;
FIG. 2 is a simplified cross-section side view of an exemplary combustor as may incorporate various embodiments of the present disclosure;
FIG. 3 provides an exploded perspective view of a portion of the combustor including a system for mounting an axially staged fuel injector according to at least one embodiment of the present disclosure;
FIG. 4 provides an assembled cross sectional upstream view of the system as shown in FIG. 3, according to at least one embodiment of the present disclosure;
FIG. 5 provides a top view of a portion of the system as shown in FIGS. 3 and 4, according to at least one embodiment of the present disclosure; and
FIG. 6 provides a block diagram of a method for mounting an axially staged fuel injector according to at least one embodiment of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

As used herein, the terms "first", "second", and "third" may be used interchangeably to distinguish one component from another and are not intended to signify location or importance of the individual components. The terms "upstream" and "downstream" refer to the relative direction with respect to fluid flow in a fluid pathway. For example, "upstream" refers to the direction from which the fluid flows, and "downstream" refers to the direction to which the fluid flows. The term "radially" refers to the relative direction that is substantially perpendicular to an axial centerline of a particular component, the term "axially" refers to the relative direction that is substantially parallel and/or coaxially aligned to an axial centerline of a particular component and the term "circumferentially" refers to the relative direction that extends around the axial centerline of a particular component.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Each example is provided by way of explanation, not limitation. In fact, it will be apparent to those skilled in the art that modifications and variations can be made without departing from the scope or spirit thereof. For instance, features illustrated or described as part of one embodiment may be used on another embodiment to yield a still further embodiment. Thus, it is intended that the present disclosure covers such modifications and variations as come within the scope of the appended claims and their equivalents. Although exemplary embodiments of the present disclosure will be described generally in the context of a combustor for a land based power generating gas turbine combustor for purposes of illustration, one of ordinary skill in the art will readily appreciate that embodiments of the present disclosure may be applied to any style or type of combustor for a turbomachine and are not limited to combustors or combustion systems for land based power generating gas turbines unless specifically recited in the claims.

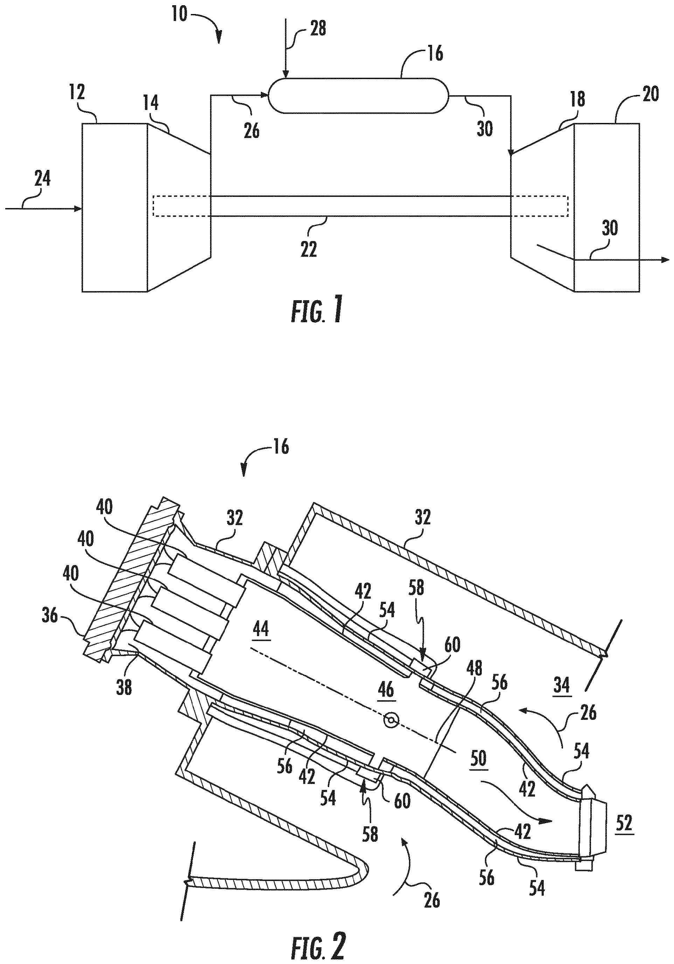

Referring now to the drawings, FIG. 1 illustrates a schematic diagram of an exemplary gas turbine 10. The gas turbine 10 generally includes an inlet section 12, a compressor 14 disposed downstream of the inlet section 12, at least one combustor 16 disposed downstream of the compressor 14, a turbine 18 disposed downstream of the combustor 16 and an exhaust section 20 disposed downstream of the turbine 18. Additionally, the gas turbine 10 may include one or more shafts 22 that couple the compressor 14 to the turbine 18.

During operation, air 24 flows through the inlet section 12 and into the compressor 14 where the air 24 is progressively compressed, thus providing compressed air 26 to the combustor 16. At least a portion of the compressed air 26 is mixed with a fuel 28 within the combustor 16 and burned to produce combustion gases 30. The combustion gases 30 flow from the combustor 16 into the turbine 18, wherein energy (kinetic and/or thermal) is transferred from the combustion gases 30 to rotor blades (not shown), thus causing shaft 22 to rotate. The mechanical rotational energy may then be used for various purposes such as to power the compressor 14 and/or to generate electricity. The combustion gases 30 exiting the turbine 18 may then be exhausted from the gas turbine 10 via the exhaust section 20.

As shown in FIG. 2, the combustor 16 may be at least partially surrounded an outer casing 32 such as a compressor discharge casing. The outer casing 32 may at least partially define a high pressure plenum 34 that at least partially surrounds various components of the combustor 16. The high pressure plenum 34 may be in fluid communication with the compressor 14 (FIG. 1) so as to receive the compressed air 26 therefrom. An end cover 36 may be coupled to the outer casing 32. In particular embodiments, the outer casing 32 and the end cover 36 may at least partially define a head end volume or portion 38 of the combustor 16. In particular embodiments, the head end portion 38 is in fluid communication with the high pressure plenum 34 and/or the compressor 14.

Fuel nozzles 40 extend axially downstream from the end cover 36. One or more annularly shaped liners or ducts 42 may at least partially define a primary or first combustion or reaction zone 44 for combusting the first fuel-air mixture and/or may at least partially define a secondary combustion or reaction zone 46 formed axially downstream from the first combustion zone 44 with respect to an axial centerline 48 of the combustor 16. The liner 42 at least partially defines a hot gas path 50 from the primary fuel nozzle(s) 40 to an inlet 52 of the turbine 18 (FIG. 1). In at least one embodiment, the liner 42 may be formed so as to include a tapering or transition portion. In particular embodiments, the liner 42 may be formed from a singular or continuous body. A flow sleeve 54 circumferentially surrounds at least a portion of the liner 42. The flow sleeve 54 is radially spaced from the liner 42 to form a cooling flow annulus 56 therebetween.

In at least one embodiment, the combustor 16 includes an axially staged fuel injection system 58. The axially staged fuel injection system 58 includes at least one fuel injector or fuel injector assembly 60 axially staged or spaced from the primary fuel nozzle(s) 40 with respect to axial centerline 48. The fuel injector 60 is disposed downstream of the primary fuel nozzle(s) 40 and upstream of the inlet 52 to the turbine 18. It is contemplated that a number of fuel injectors 60 (including two, three, four, five, or more fuel injector assemblies 60) may be used in a single combustor 16.

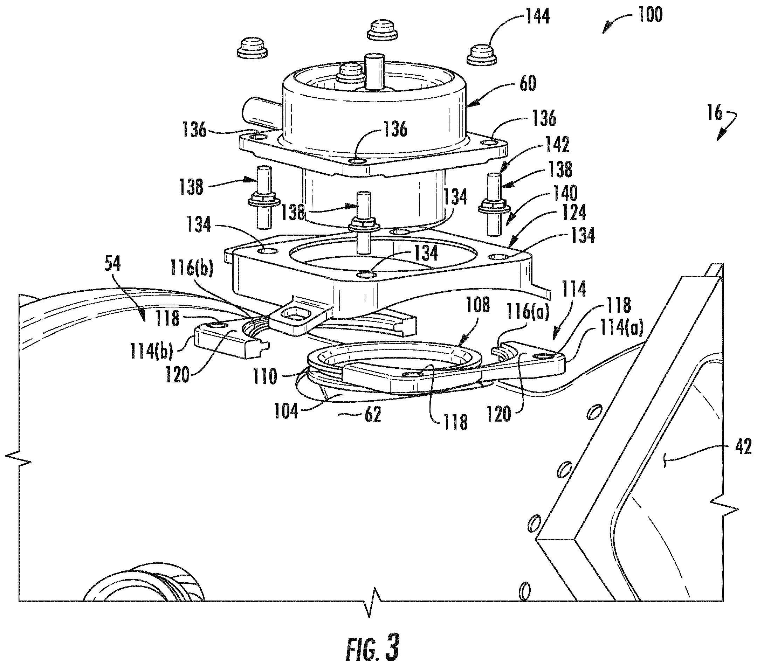

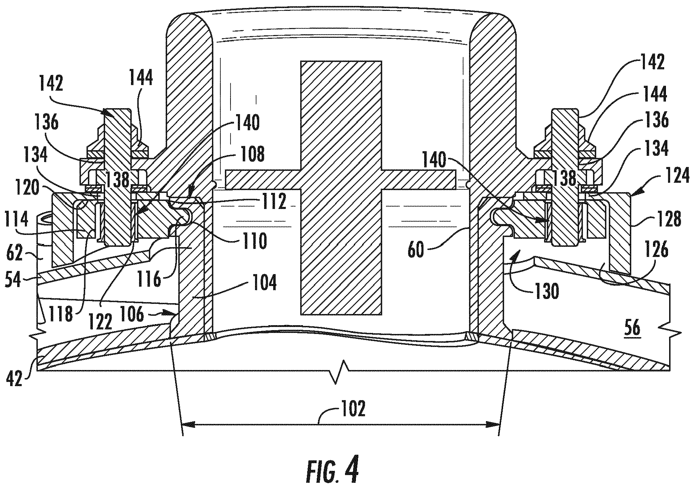

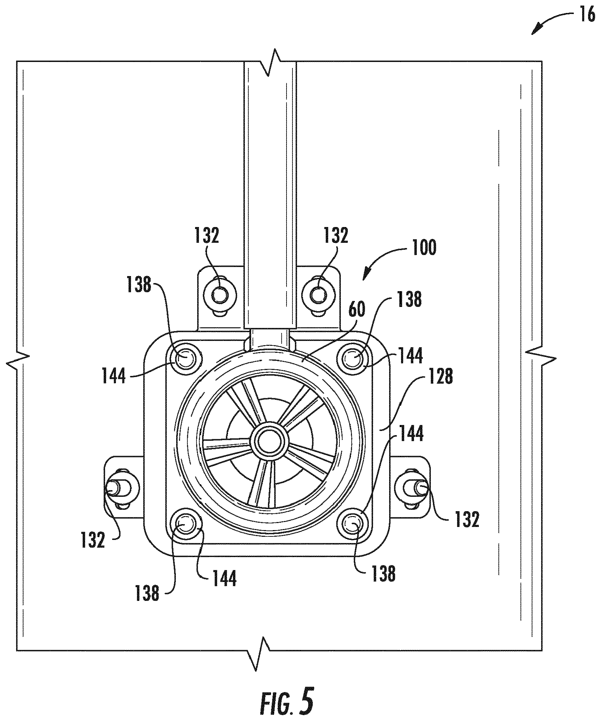

In various embodiments, a system for mounting the axially staged fuel injector(s) 60, herein referred to as "system" is provided. FIG. 3 provides an exploded perspective view of a portion of the combustor 16 including the system 100 according to at least one embodiment of the present disclosure. FIG. 4 provides an assembled cross sectional upstream view of the system 100 as shown in FIG. 3, according to at least one embodiment of the present disclosure. FIG. 5 provides a top view of a portion of the system 100 as shown in FIGS. 3 and 4 according to at least one embodiment of the present disclosure.

In at least one embodiment, as shown in FIGS. 3 and 4 collectively, the system 100 includes the annularly shaped liner 42. As shown in FIG. 4, the liner 42 defines an injector opening 102 that extends radially through the liner 42. The flow sleeve 54 circumferentially surrounds at least a portion of the liner 42 and the cooling flow annulus 56 is formed radially therebetween. As shown in FIGS. 3 and 4, an annular injector boss 104 extends radially from the liner 42 through the flow sleeve 54. The injector boss 104 is formed to receive a portion of the fuel injector 60. The injector boss 104 has a first end portion 106 (FIG. 4) that extends circumferentially about the injector opening 102. The first end portion 106 may partially define the hot gas path 50 (FIG. 2). As shown in FIGS. 3 and 4, the injector boss 104 includes a second end portion 108 that is disposed radially outwardly from an outer surface 62 of the flow sleeve 54.

In particular embodiments, as shown in FIGS. 3 and 4 the injector boss 104 at least partially defines a slot or groove 110. In at least one embodiment, the slot 110 may be defined along a side wall 112 of the injector boss 104 proximate to the second end portion 108. The slot 110 may extend circumferentially about the injector boss 104 within and/or along the side wall 112. In various embodiments, the slot 110 is positioned radially outward from the outer surface 62 of the flow sleeve 54.

In at least one embodiment, as shown in FIGS. 3 and 4 collectively, the system 100 includes a support plate 114 disposed radially outwardly from the outer surface 62 of the flow sleeve 54. The support plate 114 extends circumferentially at least partially around the injector boss 104. As shown in FIG. 4, the support plate 114 includes an inner portion or surface 116 that extends into the slot 110 defined by the injector boss 104.

In at least one embodiment, as shown in FIG. 3, the support plate 114 is made up of multiple plates formed to wrap around the injector boss and/or extend into the slot 110. For example, as shown in FIG. 3, the support plate 114 may comprise a first plate 114(a) and a second plate 114(b). Each of the first plate 114(a) and the second plate 114(b) may include a respective inner surface or portion 116(a), 116(b) which extends within the slot 110. The inner surface 116(a), 116(b) may be generally arcuate.

In at least one embodiment, as shown in FIGS. 3 and 4, one or more of the support plate 114 or support plates 114(a), 114(b) define one or more fastener openings 118 along a top side 120 of the respective support plate 114, 114(a), 114(b). In particular embodiments, one or more fastener openings 118 may be threaded or may include a threaded insert 122 (FIG. 4) for receiving a threaded fastener.

In at least one embodiment, as shown in FIGS. 3 and 4 collectively, the system 100 may include a support plate cap 124. As shown in FIG. 4, the support plate cap 124 includes an inner side 126, an outer side 128 and a pocket or void 130 defined along the inner side 126. At least a portion of the support plate 104 may be seated or disposed within the pocket 130.

In particular embodiments, the support plate cap 124 is fixedly connected to the flow sleeve 54. For example, as shown in FIG. 5, the support plate cap 124 may be bolted or otherwise fastened or attached to the flow sleeve 54 via one or more fasteners 132. In particular embodiments, the support plate cap 124 is sealed against the outer surface 62 of the flow sleeve 54.

In particular embodiments, as shown in FIGS. 3 and 4, the support plate cap 124 defines a plurality of fastener holes 134 coaxially aligned with a respective fastener opening 118 defined by the support plate 114 and a respective mounting hole 136 defined by the axially staged fuel injector 60. In at least one embodiment, as shown in FIGS. 3, 4 and 5 collectively, at least one doubled ended stud 138 may be used to secure or attach the support plate cap 124 to the support plate 114. As shown in FIG. 4, a first end portion 140 of the double ended stud 138 is threadingly engaged with the support plate 114 for example via the threaded insert 122 and a second end portion 142 of the doubled ended stud 138 extends radially through a respective mounting hole 136 defined by the fuel injector 60.

In particular embodiments, as shown in FIGS. 3, 4 and 5 collectively, at least one doubled ended stud 138 extends from the support plate 114 through a respective fastener hole 134 of the support plate cap 124 and through a respective mounting hole 136 defined by the fuel injector 60. The first end 140 of the double ended stud 138 is threadingly engaged with the support plate 114 and the second end 142 of the doubled ended stud 138 is threadingly engaged with a nut 144.

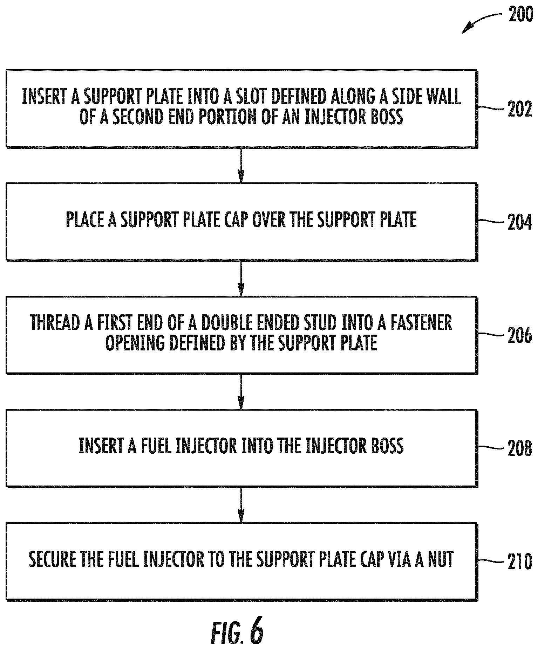

The various embodiments described and illustrated herein provide a method 200 for mounting an axially staged fuel injector 60. FIG. 6 provides a block diagram of method 200 according to one embodiment of the present disclosure. As shown in FIG. 6 at step 202, method 200 includes inserting the support plate 114 and/or supports plates 114(a), 114(b) into the slot 110 defined along the side wall 112 of the second end portion 108 of the injector boss 104 where the second end portion 108 is disposed radially outwardly from the outer surface 62 of the flow sleeve 54. At step 204, method 200 includes placing the support plate cap 124 over the support plate 114. At step 206, method 200 includes threading the first end 140 of a respective double ended stud 138 into a respective fastener opening 118 defined by the support plate 114 where the double ended stud 138 extends through the support plate cap 124. At step 208, method 200 includes inserting the fuel injector 60 into the injector boss 104 where the second end 142 of the double ended stud 138 extends through a respective mounting hole 136 defined by the fuel injector 62. At step 210, method 200 includes securing or attaching the fuel injector 60 to the support plate cap 124 via a nut 144 threadingly engaged with the second end 142 of the double ended stud 138.

The various embodiment of the system for mounting axially staged fuel injectors 100 described and illustrated herein provide various technical benefits over existing mounting configurations. For example, by positioning the various mounting components such as the support plate 114, the support plate cap 124, the double ended studs 138 and the portion of the injector boss 104 that engages with these components flow obstructions within the cooling flow annulus are reduced, thereby enhancing cooling of the liner during operation of the combustor 16. In addition, the system 100 may reduce assembly and disassembly time for installing and removing the fuel injectors 60.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

Various aspects and embodiments of the present invention are disclosed in the following numbered clauses. Any features of any of the embodiments and aspects may be readily combined.
1. A system for mounting an axially staged fuel injector, comprising:
   an annularly shaped liner at least partially defining a hot gas path of a combustor, wherein the liner defines an injector opening that extends radially through the liner;
   a flow sleeve circumferentially surrounding at least a portion of the liner, wherein the flow sleeve is radially spaced from the liner to form a cooling flow annulus therebetween; and
   an annular injector boss extending radially from the liner through the flow sleeve, the injector boss having a first end portion that extends circumferentially about the injector opening and a second end portion disposed radially outwardly from an outer surface of the flow sleeve, wherein the injector boss is formed to receive a fuel injector.
2. The system as in clause 1, further comprising a support plate disposed radially outwardly from the outer surface of the flow sleeve, wherein the support plate extends circumferentially around the injector boss, wherein the support plate includes an inner portion that extends into a slot defined by the injector boss.
3. The system as in clause 1 or 2, wherein the support plate comprises a first plate and a second plate, wherein an inner portion of the first plate and an inner portion of the second plate extend within the slot defined by the injector boss.
4. The system as in any preceding clause, further comprising a doubled ended stud, wherein a first end of the double ended stud is threadingly engaged with the support plate and a second end of the doubled ended stud extends radially through a mounting hole defined by the fuel injector.
5. The system as in any preceding clause, further comprising a support plate cap having an inner side, an outer side and a pocket defined along the inner side, wherein at least a portion of the support plate is seated within the pocket.
6. The system as in any preceding clause, wherein the support plate cap is fixedly connected to the flow sleeve.
7. The system as in any preceding clause, wherein the support plate cap is sealed against the outer surface of the flow sleeve.
8. The system as in any preceding clause, wherein the support plate cap defines a plurality of fastener holes, wherein each fastener hole is coaxially aligned with a respective fastener opening defined by the support plate and a mounting hole defined by the axially staged fuel injector.
9. The system as in any preceding clause, further comprising a doubled ended stud that extends from the support plate through the support cover and through a mounting hole defined by the fuel injector, wherein a first end of the double ended stud is threadingly engaged with the support plate and a second end of the doubled ended stud is threadingly engaged with a nut.
10. A system for mounting an axially staged fuel injector, comprising:
   an annularly shaped liner at least partially defining a hot gas path of a combustor, wherein the liner defines a injector boss opening that extends radially through the liner;
   a flow sleeve circumferentially surrounding at least a portion of the liner, wherein the flow sleeve is radially spaced from the liner to form a cooling flow annulus therebetween; and
   an annular injector boss coaxially aligned with the injector opening and extending radially from the liner through the flow sleeve, the injector boss having a first end portion fixedly connected to the liner and a second end portion disposed radially outwardly from an outer surface of the flow sleeve, wherein the injector boss is formed to receive a fuel injector.
11. The system as in clause 10, further comprising a support plate disposed radially outwardly from the outer surface of the flow sleeve, wherein the support plate extends circumferentially around the injector boss, wherein the support plate includes an inner portion that extends into a slot defined by the injector boss.
12. The system as in clause 10 or 11, wherein the support plate comprises a first plate and a second plate, wherein an inner portion of the first plate and an inner portion of the second plate extend within the slot defined by the injector boss.
13. The system as in any of clauses 10 to 12, further comprising a doubled ended stud, wherein a first end of the double ended stud is threadingly engaged with the support plate and a second end of the doubled ended stud extends radially through a mounting hole defined by the fuel injector.
14. The system as in any of clauses 10 to 13, further comprising a support plate cap having an inner side, an outer side and a pocket defined along the inner side, wherein at least a portion of the support plate is seated within the pocket.
15. The system as in any of claims 10 to 14, wherein the support plate cap is fixedly connected to the flow sleeve.
16. The system as in any of clauses 10 to 15, wherein the support plate cap is sealed against the outer surface of the flow sleeve.
17. The system as any of clauses 10 to 16, wherein the support plate cap defines a plurality of fastener holes, wherein each fastener hole is coaxially aligned with a respective fastener opening defined by the support plate and a mounting hole defined by the axially staged fuel injector.
18. The system as in any of clauses 10 to 17, further comprising a doubled ended stud that extends from the support plate through the support cover and through a mounting hole defined by the fuel injector, wherein a first end of the double ended stud is threadingly engaged with the support plate and a second end of the doubled ended stud is threadingly engaged with a nut.
19. A method for mounting an axially staged fuel injector, comprising:
   inserting a support plate into a slot defined along a side wall of a second end portion of an injector boss, wherein the second end portion is disposed radially outwardly from an outer surface of the flow sleeve;
   placing a support plate cap over the support plate;
   threading a first end of a double ended stud into a fastener opening defined by the support plate, wherein the double ended stud extends through the support plate cap;
   inserting a fuel injector into the injector boss, wherein a second end of the double ended stud extends through a mounting hole defined by the fuel injector; and
   securing the fuel injector to the support plate cap via a nut threadingly engaged with the second end of the double ended stud.

## Claims

1. A system (100) for mounting an axially staged fuel injector (60), comprising:
an annularly shaped liner (42) at least partially defining a hot gas path of a combustor, wherein the liner (42) defines an injector opening (102) that extends radially through the liner (42);
a flow sleeve (54) circumferentially surrounding at least a portion of the liner (42), wherein the flow sleeve (54) is radially spaced from the liner (42) to form a cooling flow annulus (56) therebetween; and
an annular injector boss (104) extending radially from the liner (42) through the flow sleeve (54), the injector boss (104) having a first end (140) portion (106) that extends circumferentially about the injector opening (102) and a second end (142) portion (108) disposed radially outwardly from an outer surface (62) of the flow sleeve (54), wherein the injector boss (104) is formed to receive a fuel injector (60).

2. The system (100) as in claim 1, further comprising a support plate (114) disposed radially outwardly from the outer surface (62) of the flow sleeve (54), wherein the support plate (114) extends circumferentially around the injector boss (104), wherein the support plate (114) includes an inner portion (116) that extends into a slot (110) defined by the injector boss (104).

3. The system (100) as in claim 2, wherein the support plate (114) comprises a first plate (114a) and a second plate (114b), wherein an inner portion (116a) of the first plate (114a) and an inner portion (116b) of the second plate (114b) extend within the slot (110) defined by the injector boss (104).

4. The system (100) as in claim 2 or claim 3, further comprising a doubled ended stud (138), wherein a first end (140) of the double ended stud (138) is threadingly engaged with the support plate (114) and a second end (142) of the doubled ended stud (138) extends radially through a mounting hole defined by the fuel injector (60).

5. The system (100) as in any of claims 2 to 4, further comprising a support plate cap (124) having an inner side (126), an outer side (128) and a pocket (130) defined along the inner side (126), wherein at least a portion of the support plate (114) is seated within the pocket (130).

6. The system (100) as in claim 5, wherein the support plate cap (124) is fixedly connected to the flow sleeve (54).

7. The system (100) as in claim 5 or claim 6, wherein the support plate cap (124) is sealed against the outer surface (62) of the flow sleeve (54).

8. The system (100) as any of claims 5 to 7, wherein the support plate cap (124) defines a plurality of fastener holes, wherein each fastener hole is coaxially aligned with a respective fastener opening defined by the support plate (114) and a mounting hole defined by the axially staged fuel injector (60).

9. The system (100) as in any of claims 5 to 8, further comprising a doubled ended stud (138) that extends from the support plate (114) through the support cover and through a mounting hole defined by the fuel injector (60), wherein a first end (140) of the double ended stud (138) is threadingly engaged with the support plate (114) and a second end (142) of the doubled ended stud (138) is threadingly engaged with a nut.

10. A system (100) for mounting an axially staged fuel injector (60), comprising:
an annularly shaped liner (42) at least partially defining a hot gas path of a combustor, wherein the liner (42) defines a injector boss (104) opening that extends radially through the liner (42);
a flow sleeve (54) circumferentially surrounding at least a portion of the liner (42), wherein the flow sleeve (54) is radially spaced from the liner (42) to form a cooling flow annulus (56) therebetween; and
an annular injector boss (104) coaxially aligned with the injector opening (102) and extending radially from the liner (42) through the flow sleeve (54), the injector boss (104) having a first end (140) portion (106) fixedly connected to the liner (42) and a second end (142) portion (108) disposed radially outwardly from an outer surface (62) of the flow sleeve (54), wherein the injector boss (104) is formed to receive a fuel injector (60).

11. The system (100) as in claim 10, further comprising a support plate (114) disposed radially outwardly from the outer surface (62) of the flow sleeve (54), wherein the support plate (114) extends circumferentially around the injector boss (104), wherein the support plate (114) includes an inner portion (116) that extends into a slot (110) defined by the injector boss (104).

12. The system (100) as in claim 11, wherein the support plate (114) comprises a first plate (114a) and a second plate (114b), wherein an inner portion (116) of the first plate (114a) and an inner portion (116) of the second plate (114b) extend within the slot (110) defined by the injector boss (104).

13. The system (100) as in claim 11 or claim 12, further comprising a doubled ended stud (138), wherein a first end (140) of the double ended stud (138) is threadingly engaged with the support plate (114) and a second end (142) of the doubled ended stud (138) extends radially through a mounting hole defined by the fuel injector (60).

14. The system (100) as in any of claims 11 to 13, further comprising a support plate cap (124) having an inner side (126), an outer side (128) and a pocket (130) defined along the inner side (126), wherein at least a portion of the support plate (114) is seated within the pocket (130).

15. A method for mounting an axially staged fuel injector (60), comprising:
inserting a support plate (114) into a slot defined along a side wall of a second end portion of an injector boss (104), wherein the second end portion is disposed radially outwardly from an outer surface of the flow sleeve (54);
placing a support plate cap (124) over the support plate (114);
threading a first end (140) of a double ended stud (138) into a fastener opening defined by the support plate (114), wherein the double ended stud (138) extends through the support plate cap (124);
inserting a fuel injector (60) into the injector boss (104), wherein a second end (142) of the double ended stud (138) extends through a mounting hole defined by the fuel injector (60); and
securing the fuel injector (60) to the support plate cap (124) via a nut threadingly engaged with the second end (142) of the double ended stud (138).
